# EUROPEAN PATENT APPLICATION

(11) **EP 4 685 050 A1**
(43) Date of publication of application: **28.01.2026**
(21) Application number: 25191271.3
(22) Date of filing: 23.07.2025
(51) Int. Cl.: B64C 25/18, F16F 7/10, F16F 7/104, F15B 15/14, F15B 21/00

(54) **AIRCRAFT LANDING GEAR**

(30) Priority: 24.07.2024 GB 202410842
(71) Applicant: Airbus Operations Limited, Bristol BS34 7PA (GB)
(72) Inventor: LOPEZ GARCIA, Alvaro, Filton, Bristol, BS34 7PA (GB)
(74) Representative: EIP

(57) **Abstract**

Disclosed is an aircraft landing gear comprising a linear actuator attached to a portion of the aircraft landing gear and operable to move the portion of the aircraft landing gear, and a tuned mass damper attached to the linear actuator, the tuned mass damper configured to reduce an amplitude of vibration of the linear actuator. An actuation system, aircraft, and method of constructing an aircraft landing gear are also disclosed.

## Description

### TECHNICAL FIELD

The present invention relates to aircraft landing gear, and specifically to actuation systems for aircraft landing gear.

### BACKGROUND

Aircraft landing gear are subject to physical forces during aircraft operation such as flight, landing, and manoeuvres on the ground. It is important to provide robust aircraft landing gear which are resilient to physical forces. However, strengthening aircraft landing gear can increase weight of the aircraft. It is desirable to improve aircraft landing gear.

### SUMMARY

A first aspect of the present invention provides an aircraft landing gear, wherein the aircraft landing gear comprises a linear actuator attached to a portion of the aircraft landing gear and operable to move the portion of the aircraft landing gear, and a tuned mass damper attached to the linear actuator, the tuned mass damper configured to reduce an amplitude of vibration of the linear actuator.

Vibrations may arise from other portions of the aircraft, such as the engine, and be transmitted through structural elements of the aircraft to the aircraft landing gear. In a linear actuator, it can be important to ensure proper alignment of portions which move relative to one another, and vibrations can disrupt this alignment. Furthermore, vibrations can induce strains and stress in the linear actuator which can lead to damage of the linear actuator, for example being accumulated over time. By incorporating a tuned mass damper, the linear actuator may become less susceptible to the adverse effects of vibrations.

With a reduced susceptibility to the adverse effects of vibrations, the linear actuator can be designed with a lighter construction, as the need for additional reinforcing structural elements intended to stiffen the linear actuator is reduced. A lighter linear actuator may contribute to an overall reduction in the aircraft's weight.

Furthermore, reducing the vibrations experienced by the linear actuator may enable the use of longer linear actuators, which might otherwise be more prone to vibrations than shorter linear actuators due to longer linear actuators tending to have lower resonant frequencies. External driving forces are more likely to generate vibrations in the linear actuator at such lower resonant frequencies.

The tuned mass damper may also reduce amplitude of vibrations at frequencies which are not resonant frequencies of the linear actuator.

Optionally, the tuned mass damper comprises a solid mass which is elastically coupled to the linear actuator, and a damper component for dissipating vibrational energy. Such elastic coupling can be realised by an elastic component such as springs, compressible materials such as elastomeric materials, and the likes. The damper component may be configured to dissipate vibrational energy of the solid mass in the vibrational mode or vibrational modes permitted by the elastic coupling.

Optionally, the tuned mass damper contains a liquid mass and is at least partially configured as a liquid mass damper. A liquid mass damper typically comprises an internal volume in which a liquid mass can move, and in particular slosh back and forth, to thereby absorb a portion of vibrational energy.

In some examples, the tuned mass damper has a hybrid solid/liquid design, wherein a solid mass is coupled to the linear actuator and a liquid mass is also coupled to the linear actuator.

Optionally, the tuned mass damper is formed integrally with the linear actuator. That is, in some examples, the tuned mass damper and linear actuator are housed by a common housing, and/or share a common structural element. In some examples, at least a portion of the linear actuator and at least a portion of the tuned mass damper are formed in a common manufacturing process. In some examples, the integrally formed tuned mass damper and linear actuator may have a reduced spatial footprint compared with examples in which they are provided as separate components, for example, which may allow for their use in landing gears which have tight spatial requirements, for example.

Optionally, the tuned mass damper is configured to reduce an amplitude of vibration in a vibrational mode of the linear actuator. A vibrational mode occurs at a resonant frequency of the linear actuator. In some examples, the tuned mass damper may have no or reduced damping effects for vibration in further vibrational modes, and may only have a damping effect in a single vibrational mode of the linear actuator. This can be useful where vibration is anticipated in primarily a single vibrational mode, and vibrations in further vibrational modes can be tolerated, for example. This can produce a more compact design, such as a smaller size or weight, of the tuned mass damper compared with cases where vibration in multiple vibrational modes is anticipated, and a tuned mass damper configured to reduce amplitude of vibration in multiple vibrational modes is provided. A vibrational mode may involve vibration of the linear actuator in one or several directions; vibrational modes may be involve movement purely in a transverse direction relative to a longitudinal axis of the linear actuator, movement purely in a longitudinal direction relative to a longitudinal axis of the linear actuator, movement purely in a rotational direction around a longitudinal axis of the linear actuator, or movements combining multiple directions, for example. The single vibrational mode may be a fundamental mode or a higher-order mode; for example, a higher-order mode may be more detrimental to the linear actuator, so damping of this higher-order mode may be targeted.

Optionally, the tuned mass damper is additionally configured to reduce an amplitude of vibration in a further vibrational mode of the linear actuator. That is, in some examples the tuned mass damper is configured to reduce an amplitude of vibration in more than one vibrational mode; a first vibrational mode and a second vibrational mode, for example. This can be advantageous where, for example, there are multiple sources of vibrations which excite multiple vibrational modes of the linear actuator. In particular, and as mentioned above, vibration in different vibrational modes may affect the linear actuator in different ways, even if respective amplitudes of vibration in such modes is different; a smaller amplitude of vibration in one mode may be more detrimental to a component than a larger amplitude of vibration in another mode, for example. In some examples, a longitudinal vibrational mode is the first vibrational mode, and a transverse vibrational mode is the second vibrational mode. In some examples, the first vibrational mode is a lower order resonance having a lower frequency of vibration, and the second vibrational mode is a higher order resonance having a higher frequency of vibration.

Optionally, the tuned mass damper is additionally configured to reduce an amplitude of vibration in a yet further vibrational mode of the linear actuator. In some examples, the tuned mass damper is configured to reduce amplitude of vibration in each of transverse, longitudinal, and torsional vibrational modes.

Optionally, the tuned mass damper may be configured to reduce vibrations which occur in one direction. In some examples, the tuned mass damper is configured to reduce amplitude of vibrations with components in two orthogonal directions. In some examples, the tuned mass damper is configured to reduce amplitude of vibrations which occur with components in three orthogonal directions. Vibrational modes may be complex and exhibit vibrations in combinations of directions.

Optionally, the tuned mass damper is configured to reduce an amplitude of vibration corresponding to a fundamental frequency of the linear actuator when attached to the aircraft landing gear. A lower resonant frequency mode, such as the fundamental frequency mode, may, relative to higher order resonant frequency modes, be more readily excited by vibrations experienced by the aircraft landing gear.

Optionally, the tuned mass damper extends substantially around an external surface of the linear actuator to thereby at least partially surround the linear actuator. This can distribute the mass of the tuned mass damper around the linear actuator.

Optionally, the tuned mass damper has an annular body and the linear actuator is arranged with an annulus of the annular body. This can distribute the mass of the tuned mass damper around the linear actuator in a uniform fashion. This can also reduce a degree to which the tuned mass damper protrudes in a given direction from the linear actuator, which can aid in allowing the tuned mass damper to fit within the aircraft landing gear.

Optionally, the tuned mass damper extends primarily along a longitudinal axis of the linear actuator, having a longitudinal extent greater than a lateral extent, the lateral extent perpendicular to the longitudinal extent. In some examples, the tuned mass damper and linear actuator are substantially elongate, such that their spatial extent in a radial direction, perpendicular to the longitudinal axis, is small relative to their longitudinal extent. This can result in a small spatial footprint in radial directions which can improve the fit of the linear actuator and tuned mass damper within the aircraft landing gear system.

Optionally, the tuned mass damper extends along a majority of the longitudinal axis of the linear actuator.

Optionally, the aircraft landing gear comprises at least one further tuned mass damper attached to the linear actuator.

Optionally, the tuned mass damper and each further tuned mass damper are each configured to reduce a respective amplitude of vibration at a respective frequency.

Optionally, the tuned mass damper and each further tuned mass damper are each configured to reduce a respective amplitude of vibration in a respective vibrational mode.

Optionally, the linear actuator is a retraction actuator and the portion of the aircraft landing gear is a strut assembly of the aircraft landing gear, the retraction actuator being operable to retract and extend the landing gear to and from a landing gear bay. Other examples are possible, and the linear actuator may be attached to other parts of the aircraft landing gear than the strut assembly, for example. In other examples, the linear actuator is an unlock actuator in the landing gear. An aircraft landing gear system may comprise multiple linear actuators, each according to the first aspect of the present invention.

A second aspect of the present invention provides an aircraft comprising the aircraft landing gear of the first aspect. In other words, an aircraft comprising an aircraft landing gear, wherein the aircraft landing gear comprises a linear actuator attached to a portion of the aircraft landing gear and operable to move the portion of the aircraft landing gear, and a tuned mass damper attached to the linear actuator, the tuned mass damper configured to reduce an amplitude of vibration of the linear actuator.

A third aspect of the present invention provides an actuation system for an aircraft landing gear, the actuation system comprising: a linear actuator attachable to a portion of the aircraft landing gear; and a tuned mass damper attached to the linear actuator, the tuned mass damper configured to reduce an amplitude of vibration of the linear actuator. In some examples, the tuned mass damper is tuned to a resonant frequency of the linear actuator when attached to the portion of the aircraft landing gear.

A fourth aspect of the present invention provides a method of constructing an aircraft landing gear, comprising: determining a resonant frequency of a linear actuator; providing a tuned mass damper at the resonant frequency of the linear actuator; attaching the tuned mass damper to the linear actuator; and assembling an aircraft landing gear including the actuation system.

Optionally, determining a resonant frequency of the linear actuator comprises determining the resonant frequency of the linear actuator whilst the linear actuator is attached to the aircraft landing gear.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft landing gear equipped with actuation system according to an example;
Figure 2 shows a schematic view of an actuation system according to an example;
Figure 3 shows a schematic cross-sectional view of a tuned mass damper according to an example;
Figure 4 shows a schematic cross-sectional view of a tuned mass damper according to an example;
Figure 5 shows a schematic cross-sectional view of a liquid tuned mass damper according to example;
Figure 6 shows a schematic view of a tuned mass damper according to an example;
Figure 7 shows a schematic view of a plurality of tuned mass dampers according to an example;
Figure 8 shows a schematic view of a tuned mass damper according to an example;
Figure 9 illustrates an example of an aircraft comprising a landing gear and actuation system according to an example; and
Figure 10 is a flowchart illustrating steps for assembling an aircraft landing gear according to an example.

### DETAILED DESCRIPTION

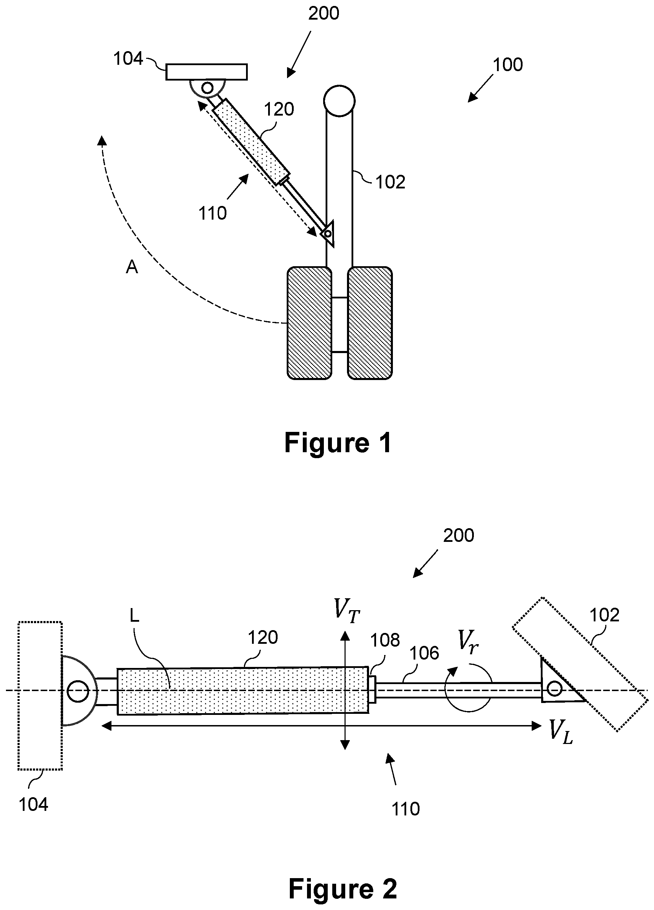

An aircraft landing gear 100 of an aircraft 1000 is illustrated, schematically, in Figure 1. The aircraft landing gear 100 is deployable to and from a landing gear bay (not illustrated) by provision of an actuation system 200, illustrated in Figure 2, which reconfigures the aircraft landing gear 100 between a deployed configuration and a retracted configuration, as indicated by the illustrative arrow A in Figure 1. The skilled person will appreciate that Figure 1 is a simplified representation of a landing gear, and in that practice reconfiguration between deployed and retracted configurations may involve further actuators and additional reorientation or repositions of constituent parts of the aircraft landing gear 100. The actuation system 200 comprises a linear actuator 110 attached between a portion of the aircraft 104, which in this example is part of the landing gear bay, and a portion of the aircraft landing gear 102, which in this example is the landing gear strut assembly. The skilled person will also appreciate that a variety of aircraft landing gear designs exist and, upon reading the present disclosure, will recognise how the actuation system 200 would be applied to other aircraft landing gear designs. For instance, some actuation systems, or portions thereof, are coupled between two portions of the aircraft landing gear itself.

The linear actuator 110 is generally longitudinal, spanning primarily along a longitudinal axis L, and comprising a piston 106 housed by a piston housing 108 arranged along this axis. The skilled person will appreciate that various forms of linear actuator exist, including hydraulic, pneumatic, electromechanical, and piezoelectric types, and that the present disclosure is not limited to a particular type of linear actuator. In general, the linear actuator 110 is operable to extend and retract the piston 106 from the piston housing 108, with the piston 106 extending and retracting along a straight path colinear with the longitudinal axis L.

The linear actuator 110, when attached to the aircraft landing gear 100, has characteristic vibrational properties. Generally, the vibrational properties are a function of the structural properties of the linear actuator 110 itself, such as material composition, size, weight, dimensions, and shape, including internal structure, and are also a function of the way in which the linear actuator 110 is attached to the aircraft landing gear 100. The linear actuator 110 can vibrate in various vibrational modes. The linear actuator 110 can vibrate in a transverse direction, indicated by arrow *V_{T},* wherein amplitude of vibration is perpendicular to a longitudinal axis of the linear actuator 110. The linear actuator 110 can vibrate in a longitudinal direction, indicated by arrow *V_{L},* wherein amplitude of vibration is parallel to the longitudinal axis of the linear actuator 110. The linear actuator 110 can vibrate in torsional modes, wherein vibrations are around the longitudinal axis of the linear actuator 110, indicated by arrow *Vᵣ.* Each vibrational mode has its own resonant frequency, which is the frequency at which the linear actuator 110 tends to vibrate in that mode. A fundamental frequency is a lowest resonant frequency, and higher order resonances exist at higher frequencies of vibration.

During operation of the aircraft 1000, vibrations arise from a range of sources such as interaction of the aircraft with the surrounding air, operation of the engines, and the like. These vibrations are generally transmitted throughout the aircraft 1000, subjecting its components external, relative to the component, driving forces (the externally-originating vibrations). As such, the linear actuator 110 can be driven by such external forces which causes vibrations of the linear actuator 110 in the aforementioned modes. When a frequency of the driving force matches a resonant frequency of the linear actuator 110, energy is transmitted more efficiently into the linear actuator 110 which undergoes more severe vibrations. Vibration in the fundamental vibrational mode, the mode with the lowest frequency of vibration, can be particularly prevalent since the driving forces which are transmitted through the aircraft 1000 to the aircraft landing gear 100 may be at similar frequencies to the fundamental mode of vibrations of the linear actuator 110.

These vibrations can potentially damage the linear actuator 110 by disrupting the mechanical alignment of the piston rod 106 with the piston housing 108. Furthermore, vibrations can introduce stresses and strains to the constituent parts of the linear actuator 110, which can accumulate over time and weaken parts of the linear actuator 110. This can require maintenance or replacement parts.

Typically, strengthening elements are provided to the linear actuator 110 to stiffen the linear actuator 110 and reduce the influence of vibrations. However, these add weight to the aircraft which is disadvantageous.

To address the issue of vibrations, the linear actuator 110 of the actuation system 200 is coupled to a tuned mass damper 120. Generally, a tuned mass damper 120 comprises a mass, an elastic component for allowing oscillations of an attached mass, and a damper component which uses e.g. friction to dissipate energy when the mass oscillates, primarily within the directions permitted by the elastic component; in some examples the elastic component and the damper component may refer to one structural component, which inherently functions to allow oscillations and damping. A resonant frequency of the tuned mass damper 120 may be tuned to a resonant frequency of the linear actuator 110. When the linear actuator 110 vibrates, the tuned mass damper 120 oscillates out-of-phase and the damped elastic mounting dissipates vibrational (i.e. mechanical) energy. This reduces amplitude of vibration of the linear actuator 110 compared to a linear actuator operating without a tuned mass damper.

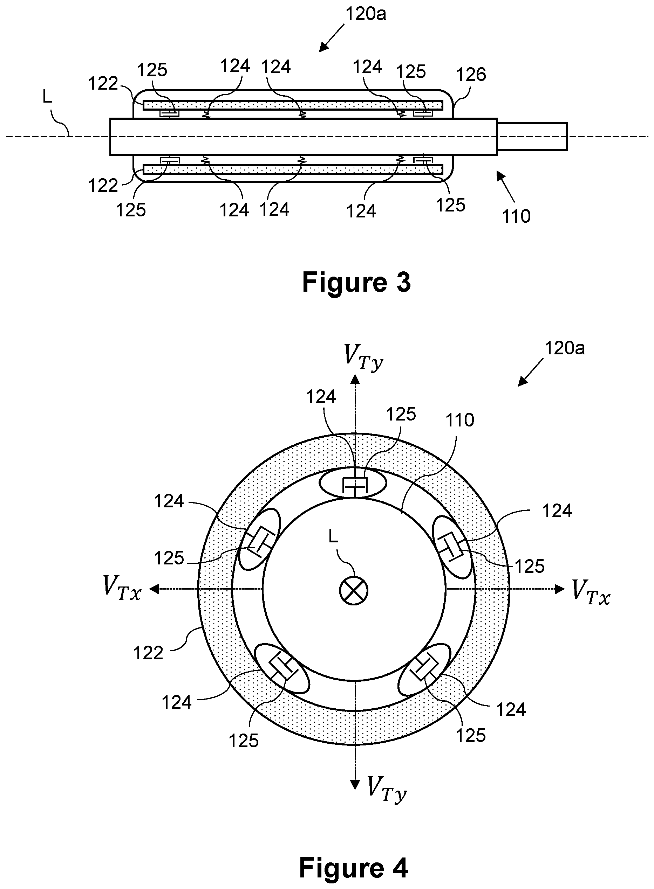

The tuned mass damper 120 can take upon a variety of forms; Figures 3-7 illustrate various examples of the tuned mass damper 120 in accordance with the present disclosure. The skilled person will recognise that each example is provided for explanatory purposes and that tuned mass dampers may include a combination of some or all of the features described hereafter, such that the present disclosure is not limited to the example described hereafter.

Figures 3 and 4 illustrate, schematically, a first example of a tuned mass damper 120a. The tuned mass damper 120a comprises a mass 120 attached to an exterior of the linear actuator 110 by springs 124, and coupled to dampers 125. The springs 124 are an example of an elastic component and in this example are helical springs. The dampers 125 may take upon any suitable form, such as passive dampers formed of elastomers, foams, or viscoelastic materials, electromagnetic dampers, dampers which utilise friction or viscous fluids, and the likes.

The mass 122, springs 124, and dampers 125 are surrounded by a housing 126 (not illustrated in Figure 4) which is also attached to the exterior of the linear actuator 110 and encapsulates the mass 122 and springs 124 and dampers 125. The housing 126 is designed to ensure airworthiness of the tuned mass damper 120a, by providing environmental protection for example. As can be seen in Figure 4, which is a cross-sectional view oriented perpendicular to the longitudinal axis L, the mass 122 is annular in shape, and the linear actuator 110 is disposed within a central annulus of the mass 122.

The springs 124 and dampers 125 are distributed circumferentially around the linear actuator 110. In the present example, five springs 124 and dampers 125 are evenly spaced around the linear actuator 110, creating rotational symmetry around the longitudinal axis L. In some examples, an even number of springs 124 and dampers 125 may be provided and regularly placed such that the arrangement thereby exhibits mirror symmetry. Since the linear actuator 110 can vibrate, transversally, in at least two orthogonal directions, indicated by arrows *V_{Ty}* and *V_{Tx},* the regular circumferential arrangement of springs 124 and dampers 125 thereby allows vibrations in any particular direction in the transverse plane (i.e. the plane defined by orthogonal directions *V_{Ty}* and *V_{Tx}*) to be damped. This can be particularly useful when the linear actuator 110 may undergo reorientation, such as when in a deployed or retracted configuration, which may lead to different vibrational modes in the different configurations.

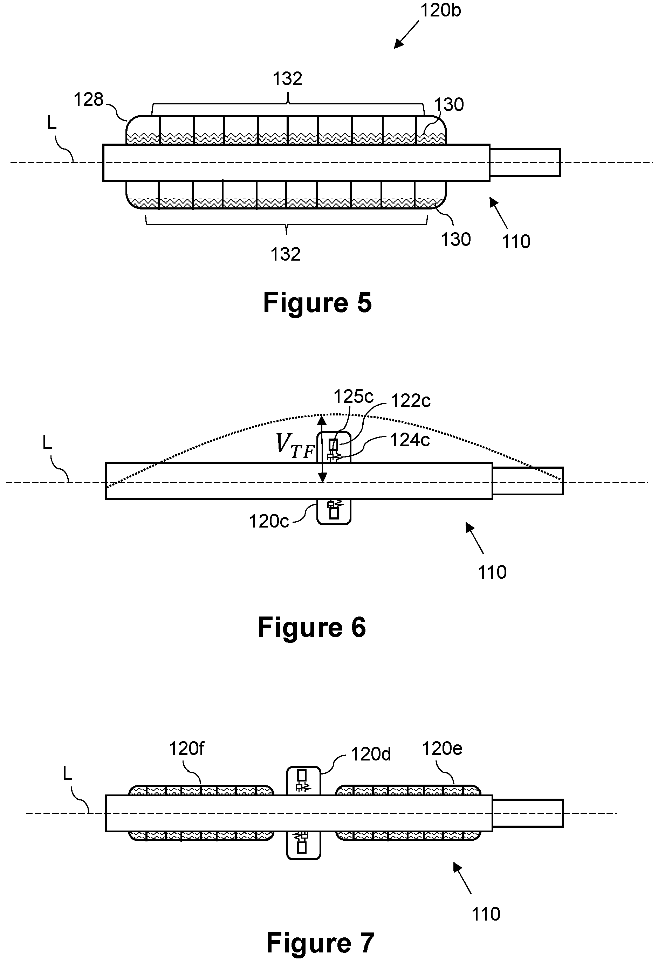

Figure 5 illustrates a second example of a tuned mass damper 120b. In this example, tuned mass damper is configured as a liquid mass damper. A body 128 is provided externally to the linear actuator 110, and comprises an array of compartments 132 arranged in sequence longitudinally. Each compartment 132 contains a liquid 130. Sloshing of the liquid 130 within the compartments 132 acts to dampen vibrations of the linear actuator 110. In general, the shape and size of the compartments 132 and the viscosity and density of the liquid 130 are design parameters which can be varied to tune the tuned mass damper 120b to a resonant frequency of the linear actuator 110. For example, in some examples, partial bulkheads may be provided within each compartment to alter the dynamics of liquid 130 within the compartments 132. In some examples, the liquid 130 may be water, oils, non-Newtonian fluids, or mixtures thereof.

Figure 6 illustrates a third example of a tuned mass damper 120c. Unlike the first and second examples 120a, 120b, the tuned mass damper 120c does not extend substantially along the longitudinal axis of the linear actuator 110, but is instead relatively localised, taking up less than 10% of the length of the linear actuator 110. Under this design principle, the tuned mass damper 120c is provided at a position, relative to the longitudinal axis L, where maximal amplitude of vibration of the linear actuator 110 is anticipated to occur at resonance with a transverse vibrational mode, indicated by arrow *V_{TF}*. In other words, it is positioned at an anti-node of the vibration. Compared with the mass 122 in the first example, a mass 122c of the tuned mass damper 120c in the third example may have a same overall mass, but be formed of a more dense material and have a smaller size to minimise or otherwise reduce a spatial footprint of the mass 122c, such as relative to the longitudinal axis. Similarly, a spring constant of a spring 124c or a degree of damping induced by a damper 125c may be adjusted relative to the springs 124 and dampers 125 in the first example to account for the differences between the tuned mass dampers 120a, 120c.

Figure 7 illustrates, schematically, further examples of tuned mass dampers; in particular an actuation system comprising three tuned mass dampers including first and second liquid mass damper 120e, 120f and a solid mass damper 120d. The solid mass damper 120d is provided, relative to the direction of the longitudinal axis, between the first liquid mass damper 120e and the second liquid mass damper 120f. The first and second liquid mass dampers 120e, 120f, in this example, are primarily configured to damp longitudinal vibrations, and the solid mass damper 120d is configured to damp transverse vibrations. In this way, multiple vibrational modes of the linear actuator 110 are damped by a plurality of tuned mass dampers. In particular, each vibrational mode may have a different resonant frequency and respective tuned mass dampers from the plurality are tuned to appropriate respective resonant frequencies. In some examples, at least one primary tuned mass damper, such as the solid mass damper 120d, may be arranged to damp vibrations at a fundamental frequency, and at least one secondary tuned mass damper, such as the liquid mass dampers 120e, 120f, may be arranged to damp vibrations at a higher-order resonant frequency. In this way, the secondary tuned mass damper may only come into effect should the higher-order vibrational modes be excited by external vibrations, for example. It will be appreciated that, in other examples, a liquid mass damper may perform the role of a primary tuned mass damper, and a solid mass damper may perform the role of a secondary tuned mass damper.

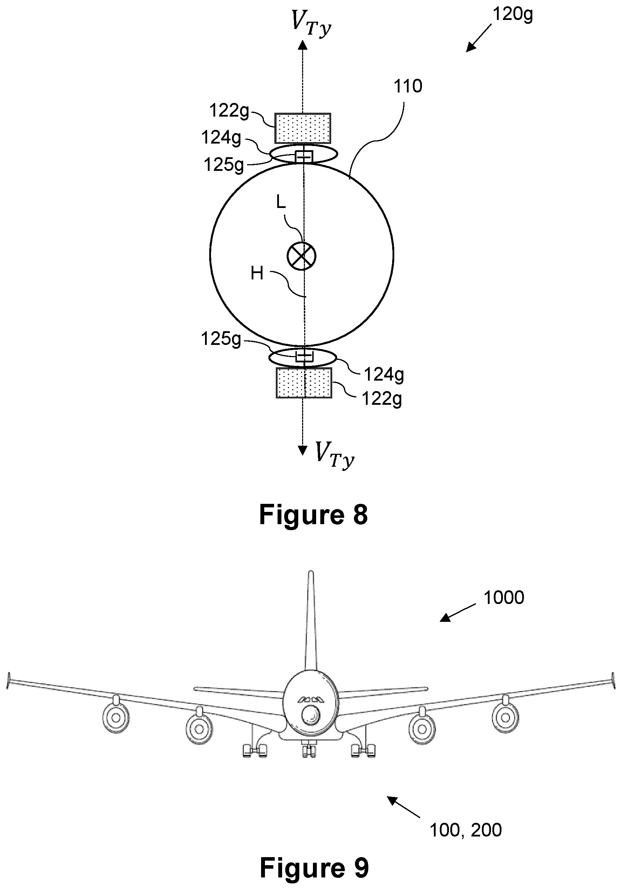

Figure 8 illustrates, schematically, a yet further example of a tuned mass damper 120g. Comparing with the first example tuned mass damper 120a, this tuned mass damper 120g does not span circumferentially around the linear actuator 110. Instead, masses 122g and associated springs 124g, dampers 125g are positioned either side of the linear actuator 110 along an axis H, which corresponds to a direction of transverse vibrations *V_{Ty}.* This can be useful when the linear actuator 110 is most likely to vibrate in a mode in which vibrations occur primarily in the transverse direction *V_{Ty}* rather than in other directions, for example. This can reduce a size of the tuned mass damper when it is known that only certain vibrational modes, such as those with oscillations occurring in a transverse direction, are significant enough to cause concern, for example. This can reduce an overall spatial footprint of the tuned mass damper and hence the actuation system, whilst still providing resilience against external vibrations.

Similarly, the tuned mass damper may provide damping in two directions, such as in systems which might only exhibit orthogonal transverse vibrations *V_{Tx}* and *V_{Ty}* as described in Figure 4, for example. In such case, an elastic coupling and corresponding damper component which only facilitates motion in those directions, or more generally within in the associated plane in which those directions lie, can be used. By extension, for systems in which vibrations in multiple directions might be expected, elastic coupling which permits movement in three or more directions can be used, and damper components provided which facilitate vibration damping in three or more directions.

Figure 9 illustrates the aircraft 1000 which comprises the aircraft landing gear 100 and actuation system 200 described previously. The aircraft landing gear 100, in comprising the actuation system 200 which includes tuned mass dampers 120, such as tuned mass dampers 120a-g, can be made lighter compared with those which comprise strengthening and stiffening elements, which can reduce an overall weight of the aircraft 1000.

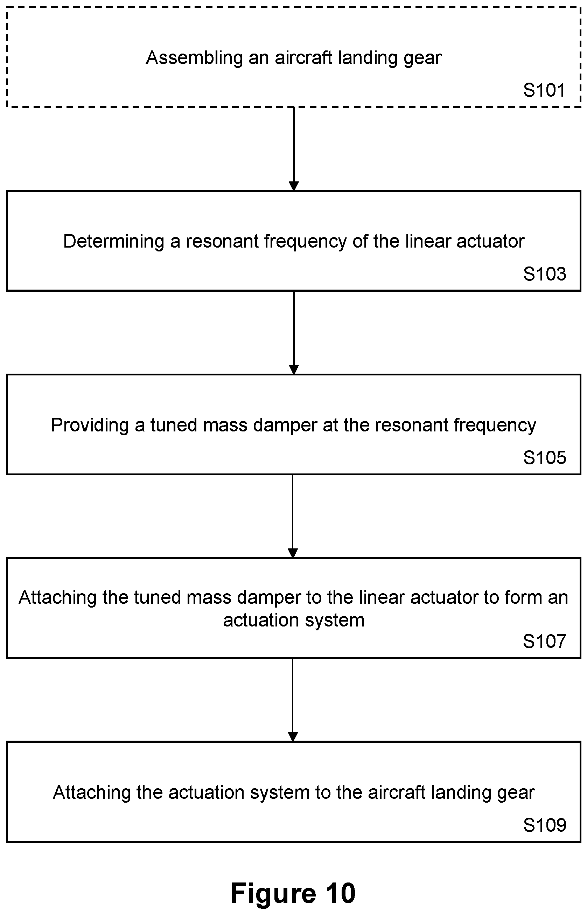

Figure 10 is a flowchart depicting a method of assembling an aircraft landing gear, according to an example.

At item S101, at least a portion of the aircraft landing gear is assembled according to conventional practices. Accordingly, the following steps can be implemented into pre-existing assembly techniques without requiring particular modifications of preceding steps. This step can be considered optional, in that items S103-S107 may occur independently from, and so in some cases before, item S101.

At item S103, a resonant frequency of the linear actuator is determined. In some examples, this can be determined by attaching the linear actuator to the aircraft landing gear to which it will be installed, for an "in-situ" measurement. Alternatively or additionally, the linear actuator may be attached to a rig which simulates the coupling of the linear actuator to the aircraft landing gear, for example. The vibrational response of the linear actuator can be measured for a range of driving force frequencies, for example, and the frequencies for which an increased response is measured indicate resonant frequencies. In yet further examples, which may be performed additionally or alternatively to the above methods, computer modelling, such as finite element techniques, may be used to simulate mechanical properties of the linear actuator and determine a resonant frequency.

At item S105, a tuned mass damper is provided, tuned to the resonant frequency identified at item S103. This may involve reconfiguration of an existing tuned mass damper, for example by adjusting a mass or spring constant. As part of this, a tuned mass damper may be subject to similar measurements as described for item S103; for example, the tuned mass damper may be measured in a rig to establish a resonant frequency based on measured vibrational response to a driving force, or computer modelling can be used to model mechanical properties, including resonant frequency, of the tuned mass damper.

At item S107 is attached to the linear actuator to form an actuation system such as the actuation system 200 illustrates in Figures 1-8.

In some examples, items S105 and S107 are embodied by provision of a tuned mass damper being integrally formed within a linear actuator.

At item S109, the actuation system is attached to the aircraft landing gear. Remaining steps of assembly of the aircraft landing gear can thereafter be performed to complete assembly of the aircraft landing gear.

It is to be appreciated that steps of the method may use reference information, such as information determined from previous aircraft landing gear assemblies. For instance, at item S103 a resonant frequency may be determined based on a previously-characterised linear actuator in a previously-assembled aircraft landing gear, which can be used as a reference. In such a case, item S103 can involve using a known linear actuator resonant frequency, for example, rather than performing any particular measurements or computer modelling. Similarly, item S105 may simply refer to using a tuned mass damper based on those previously used in constructions of similar aircraft landing gears; item S105 may refer to using a known tuned mass damper, for example one which has been determined as suitable for use with the linear actuator under consideration. Relatively minor adjustments may be made to the tuned mass damper in case of minor variations between the reference landing gear and a landing gear currently under assembly, for instance. Item S107 may refer to providing a known combination of linear actuator and tuned mass damper, for example, and combining them to form an actuation system.

It is to be appreciated that this method may be employed in a retrofitting scenario. For instance, item S101 may represent the existence of an aircraft landing gear; item S103 may involve determining a resonant frequency of the existing linear actuator in-situ, or having temporarily removed the linear actuator. Additionally or alternatively, computer modelling may be employed in a retrofitting scenario to determine the resonant frequency of the existing linear actuator, determine a resonant frequency of the tuned mass damper, and/or determine a behaviour of an actuation system formed by combination of the linear actuator with a tuned mass damper. Item S107 may involve attaching a tuned mass damper to the in-situ linear actuator or to the temporarily removed linear actuator, or to a replacement linear actuator, for example. Item S109 may involve re-attaching the resulting actuation system to the aircraft landing gear, or may be an optional step in so far as the linear actuator remained in-situ at all points during assembly.

Above embodiments are to be understood as illustrative examples of the invention. Further embodiments of the invention are envisaged:

For example, in the above examples, tuned mass dampers are provided externally to the linear actuators. This can allow their attachment after manufacture of the linear actuator, for example, and could allow them to be retro fitted onto existing linear actuators, as well as straightforwardly modified or substituted depending on the vibrational qualities of the actuation system. In some examples, the tuned mass damper may be integrally formed with the linear actuator. That is, the tuned mass damper may be provided within a common housing along with an actuation element which causes movement of the piston, for example. This can improve system compactness, for example.

For example, the illustrated examples show damper elements and springs in a one-to-one correspondence, and located in similar positions to each other. However, the skilled person will appreciate that in other examples, there may be a different number of elastic components to damper components, and these components may be spatially separated. For instance, each elastic component may permit oscillations in a respective direction, and thereby each might address a different vibrational mode of the linear actuator, whereas a single damper component damps oscillations in all the directions, for example, and so a single damper component can be provided with multiple elastic components.

For example, the solid mass dampers are described as using springs as elastic components. It will be appreciated that other elastic coupling methods exist, such as provision of an elastomeric polymer, which may be used instead or additionally to springs. Indeed, some elastic components may inherently exhibit properties permitting both oscillation and energy dissipation, thereby functioning as a damper as well.

It is be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

## Claims

1. An aircraft landing gear, wherein the aircraft landing gear comprises:
a linear actuator attached to a portion of the aircraft landing gear and operable to move the portion of the aircraft landing gear, and
a tuned mass damper attached to the linear actuator, the tuned mass damper configured to reduce an amplitude of vibration of the linear actuator.

2. The aircraft landing gear according to claim 1, wherein the tuned mass damper comprises a solid mass which is elastically coupled to the linear actuator, and a damper component for dissipating vibrational energy.

3. The aircraft landing gear according to claims 1 or 2, wherein the tuned mass damper contains a liquid mass and is at least partially configured as a liquid mass damper.

4. The aircraft landing gear according to any one of the preceding claims, wherein the tuned mass damper is formed integrally with the linear actuator; and/or wherein the linear actuator is a retraction actuator operable to retract and extend the landing gear to and from a landing gear bay.

5. The aircraft landing gear according to any one of the preceding claims, wherein the tuned mass damper is configured to reduce an amplitude of vibration in a vibrational mode of the linear actuator; optionally wherein the tuned mass damper is additionally configured to reduce an amplitude of vibration in a further vibrational mode of the linear actuator; further optionally wherein the tuned mass damper is additionally configured to reduce an amplitude of vibration in a yet further vibrational mode of the linear actuator.

6. The aircraft landing gear according to any one of the preceding claims, wherein the tuned mass damper is configured to reduce an amplitude of vibration corresponding to a fundamental frequency of the linear actuator when attached to the aircraft landing gear.

7. The aircraft landing gear according to any one of the preceding claims, wherein the tuned mass damper extends substantially around an external surface of the linear actuator to thereby at least partially surround the linear actuator.

8. The aircraft landing gear according to claim 7, wherein the tuned mass damper has an annular body and the linear actuator is arranged with an annulus of the annular body.

9. The aircraft landing gear according to claim 8, wherein the tuned mass damper extends primarily along a longitudinal axis of the linear actuator, having a longitudinal extent greater than a lateral extent, the lateral extent perpendicular to the longitudinal extent, optionally wherein the tuned mass damper extends along a majority of the longitudinal axis of the linear actuator.

10. The aircraft landing gear according to any one of the preceding claims, comprising at least one further tuned mass dampers attached to the linear actuator.

11. The aircraft landing gear according to claim 10, wherein the tuned mass damper and each further tuned mass damper are each configured to reduce a respective amplitude of vibration at a respective frequency; and/or wherein the tuned mass damper and each further tuned mass damper are each configured to reduce a respective amplitude of vibration in a respective vibrational mode.

12. An aircraft comprising the aircraft landing gear of any one of the preceding claims.

13. An actuation system for an aircraft landing gear, the actuation system comprising:
a linear actuator attachable to a portion of the aircraft landing gear; and
a tuned mass damper attached to the linear actuator, the tuned mass damper configured to reduce an amplitude of vibration of the linear actuator.

14. A method of constructing an aircraft landing gear, comprising:
determining a resonant frequency of a linear actuator;
providing a tuned mass damper at the resonant frequency of the linear actuator;
attaching the tuned mass damper to the linear actuator to form an actuation system; and
assembling an aircraft landing gear including the actuation system.

15. The method of claim 14, wherein determining a resonant frequency of the linear actuator comprises determining the resonant frequency of the linear actuator whilst the linear actuator is attached to the aircraft landing gear.
